# EUROPEAN PATENT APPLICATION

(11) **EP 0 594 131 A1**
(43) Date of publication of application: **27.04.1994**
(21) Application number: 93116887.6
(22) Date of filing: 19.10.1993
(51) Int. Cl.: B62D 29/04, B29C 45/14

(54) **Composite chassis structure and method of manufacture**

(30) Priority: 21.10.1992 US 964371
(71) Applicant: THE BUDD COMPANY, Troy, MI 48084 (US)
(72) Inventor: Freeman, Richard Benjamin, Oxford, Michigan 48370 (US)
(74) Representative: Finck, Dieter, Dr.Ing.

(57) **Abstract**

A composite chassis subframe structure for an automobile is provided having improved structural performance over comparable steel structures through the use of closed structural sections, reinforcing fiber orientation, and selective use of steel inserts (18). A foam core (12) is sandwiched between reinforcing fiber preforms (14, 16) and is further wrapped with additional reinforcing fiber cloth. Steel inserts (18) for attaching suspension and other chassis components are also wrapped and retained to the foam core (12). The sandwiched and wrapped foam core (12) is then placed in a mold where the steel inserts (18) are precision located on tooling pins, the mold is closed and plastic resin is injected thereby impregnating the fibers. Upon curing, the resin binds the structure which is now completed with the inserts locked in place to very close dimensions.

## Description

The present invention is directed to a composite chassis structure and, more particularly, to a hybrid composite chassis subframe structure which may be directly substitute for traditional steel chassis subframes presently used on automobiles.

It has long been an objective of the automobile industry to reduce the weight of vehicles thereby improving the fuel economy. In this regard, efforts have been made to substitute lighter weight materials, e.g., plastic and composite materials, for steel which has been traditionally used in the construction of automobiles. An example of these efforts is the subject of the commonly assigned U.S. Patent No. 5,000,990, the disclosure of which is hereby expressly incorporated herein by reference.

A common type of plastic or composite parts used in the automobile industry are known as fiber reinforced plastic (FRP) parts. An FRP part generally consists of a plastic shape in which carbon, fiberglass, or other reinforcing fibers are dispersed in order to provide strength to the plastic material. A method of making FRP parts is resin transfer molding (RTM). In RTM, fibrous material in a mold is injected with resin which impregnates the fibers and cures which forms the part. Examples of techniques in making RTM parts are disclosed in commonly assigned U.S. Patents No. 4,740,346; 4,849,147; and 4,863,771 the disclosures of which are hereby expressly incorporated herein by reference.

The trend towards substituting plastic or composite parts has not seen wide application with chassis parts such as subframe or cradle members. This is due in part to the fact that provision must be made for attaching the various suspension, drive train, brake components, and other chassis components to the composite subframe. Attachment of suspension control arms, for example, generally requires some form of metal bushing between the composite subframe and the suspension component for wear resistance and load transfer. It has also been difficult to develop structural cross-sections, and joints which have sufficient strength to handle the input loads exerted upon the chassis subframe members in automobile applications.

There are, however, significant economies to be achieved as well as performance advantages from developing a composite material chassis structure. For example, a typical steel subframe is constructed by welding together, in generally automated capital intensive operations, a number of steel components to create the structure. In addition to the cost of the assembly operations, each of the steel components of the subframe structure require dies and tooling to manufacture often costing several million dollars. The composite subframe structure disclosed in the present invention, on the other hand, can be molded in a single operation with a single tool. Thus there is significant tooling savings which can be had as compared to the traditional steel constructed subframe. Welding together the various steel pieces to form the subframe also results in reduced joint strength and stiffness, as compared to a one piece construction, and by purposefully orienting the reinforcing fibers it is possible to selectively increase the strength of the composite subframe structure at the joints or other areas. Composite materials also provide superior damping characteristics as compared to steel thus assisting automobile designers in providing smoother and quieter riding vehicles.

Accordingly, the present invention is directed to a composite subframe structure for an automobile. The structure provides for improved structural performance through closed structural sections, reinforcing fiber orientation, and selective use of steel inserts. A foam core is wrapped with reinforcing fiber cloth and is further sandwiched between reinforcing fiber preforms. Steel inserts for attaching suspension and other chassis components are also wrapped and retained to the subframe. The wrapped and sandwiched foam core is then placed in a mold where the steel inserts are precision located on tooling pins, the mold is closed and resin is injected thereby impregnating the fibers. Upon curing, the resin binds the structure, which is now completed, with the steel inserts locked in place to very close dimensions.

The invention also discloses a method of creating a composite chassis subframe which, through selective use of random and oriented reinforcing fibers and tying of steel inserts with reinforcing fibers into the structure, is structurally superior to traditional steel subframe structures. This method further provides for a composite chassis subframe structure which is lighter in weight and has significantly reduced tooling costs.

Embodiments of the invention are presented in the following description while referring to the accompanying drawings in which:
Fig. 1 is an exploded view of the composite subframe in an initial stage of assembly;
Fig. 2 is a perspective view of the composite chassis structure;
Fig. 3 is a perspective view of the composite chassis structure partially illustrating the wrapping of reinforcing fibers and further illustrating the layering and orientation of the reinforcing fibers;
Fig. 4 is a perspective view of the composite chassis structure in the mold;
Fig. 5 is a sectional view along line 5-5 of Fig. 3 illustrating a steel insert wrapped into the composite structure;
Fig. 6 is an additional view showing an alternate attachment of the steel insert to the composite chassis subframe;
Fig. 7 is a view similar to Fig. 6 illustrating still another attachment of the steel inserts to the composite chassis subframe;
Fig. 8 is an enlarged view of an area of the composite chassis structure illustrating the random fiber orientation used;
Fig. 9 is a view similar to Fig. 8 illustrating the plus/minus 45 degree fiber orientation used; and
Fig. 10 is a view similar to Fig. 8 illustrating the unidirectional fiber orientation used.

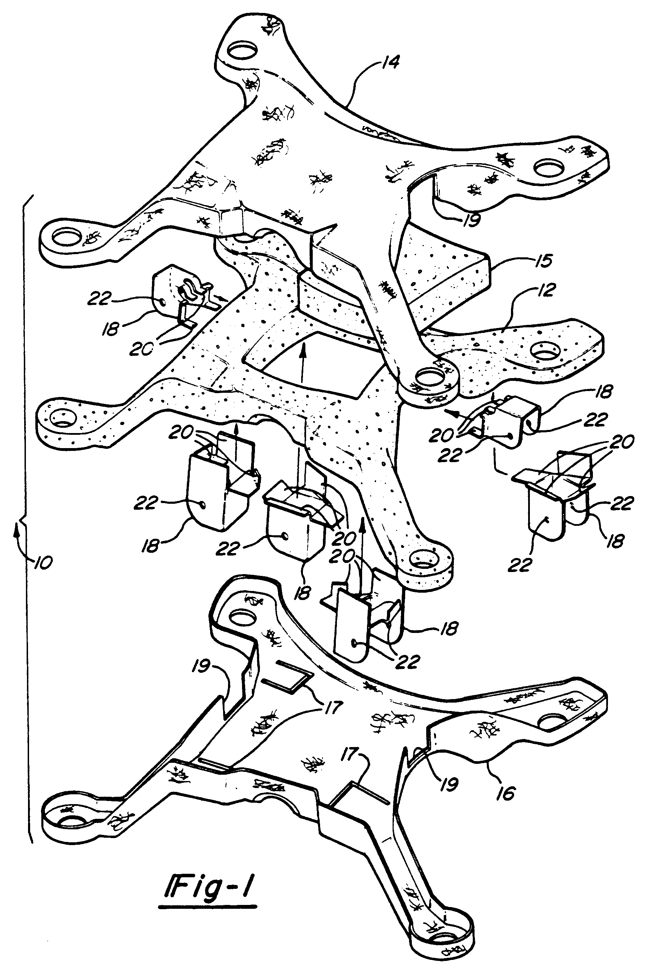

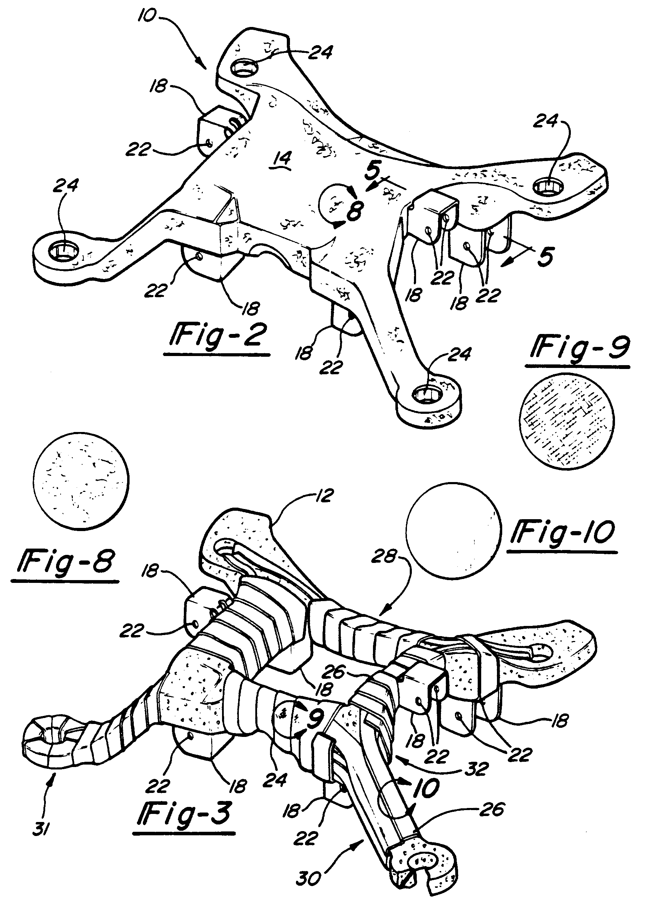

The present invention is described by way of example embodied in a rear chassis subframe structure for an automobile. It should be understood, however, that this invention need not be limited to the particular example used in connection with this invention since those skilled in the art will appreciate that its teachings can be used in a wide variety of applications. With this caveat in mind, the composite chassis subframe structure 10 is shown in Fig. 1 and Fig. 2. As best seen in Fig. 1, the composite structure consists of a foam core 12 sandwiched between a pair of fiber preforms 14 and 16. Several methods and apparatus for manufacturing the fiber preforms are disclosed in commonly assigned U.S. Patent No. 5,039,465 and U.S. Patent Application Serial No. 07/881,851 the disclosures of which are hereby incorporated herein by reference. One will appreciate, however, that fiber preforms do not have to be used, but instead, a hand lay-up process or other method of developing a layer of reinforcing fibers around the foam core can be used. For example, reinforcing fiber cloth or mats, generally available with continuous fibers oriented either unidirectionally or at fixed angles or with chopped fibers arranged randomly, can be used. In the preferred embodiment and as seen in Fig. 1 and Fig. 3, a combination of hand lay-up or wrapping with reinforcing fiber cloth 24 having plus/minus 45 degree fiber orientation (Fig. 9) or reinforcing fiber cloth 26 having unidirectional fiber orientation (Fig. 10), respectively, is used to locally enhance the structure. Fiber preforms 14 and 16, having random fiber orientation (Fig. 8) provide strength to the overall structure. It should be appreciated, however, that chopped fiber mats having random fiber orientation may be used, depending on the application, to provide both local reinforcement and overall structure in place of the reinforcing fiber cloth 24 or preforms 14 and 16. Preforms 14 and 16 and reinforcing fiber cloth 24 and 26 are preferably constructed of glass fibers, however, it is possible to use different types of reinforcing fibers such as carbon graphite fibers or a mixture of glass and graphite, depending on the particular application.

It is also not necessary to use a foam core. Instead, a bladder or blow molded support such as described in the aforementioned U.S. Patent No. 5,000,990 could be used to create the structure. Foam core 12 is sized slightly smaller than the desired dimensions of the finished composite chassis structure 10. This allows for the build up in size resulting from the addition of reinforcing material and resin. In the preferred embodiment, the foam core is reduced in size to allow for an approximately about 1/4 inch laminate of reinforcing fibers and resin material.

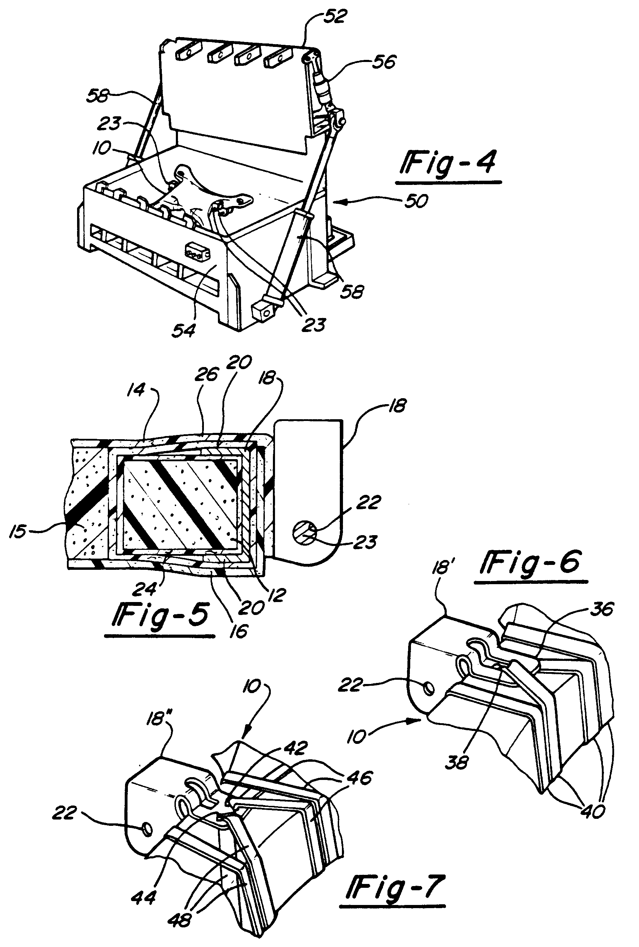

In order to provide for attachment of suspension or other chassis components, a plurality of steel inserts 18 are provided. While the particular configuration of each of the inserts 18 will vary depending on what must be attached to it, or where on the composite subframe 10 it is to be located, each have generally the same characteristics. For example, in Fig. 1 inserts 18 are shown having a plurality of tabs or flanges 20. Tabs 20 are arranged so as to nest around a portion of the composite structure 10, as can be seen in Fig. 5. Tabs 20 are further wrapped with reinforcing fiber cloth which acts to tie insert 18 in place when the composite subframe 10 is later injected with resin. Therefore, inserts 18 are not rigidly locked into place at this stage of the manufacturing process, instead, they are allowed to move a small amount. When the composite subframe 10 is placed in the mold 50, as shown in Fig. 4, locating dowels, or pins 23 within the mold engage apertures 22 formed in inserts 18 to precisely locate the inserts 18 such that the points of attachment for the chassis components, such as control arms, on the finished product will be very accurately controlled.

As best seen in Fig. 3 and Fig. 5, the foam core 12 is wrapped with reinforcing cloth 24 having plus/minus 45 degree reinforcing fibers. Steel inserts 18 are then positioned against the wrapped foam core 12 and are further wrapped with reinforcing fiber cloth 26 having generally unidirectionally oriented fibers. The wrapped foam core 12, with steel inserts in place is then sandwiched between fiber preforms 14 and 16. In the present invention, reinforcing fiber cloth is also selectively used to locally increase the strength of the composite chassis structure 10, and particularly to reinforce the mounting pads 31 as well as to react the loads from inserts 18. For example, shown wrapping the center section 28 of the composite chassis structure 10 is reinforcing fiber cloth 24 with plus/minus 45 degree fiber orientation (Fig. 9). Unidirectional fiber cloth (Fig. 10), such as illustrated at 26, allows for significantly increasing the joint stiffness of the composite structure 10. Reinforcing fiber cloth 24 and 26 is further illustrated, for example, as strips of material. It should be understood that larger sheets of material may also be used.

In particular, and best seen in Fig. 3, the unidirectional fiber cloth 26 is extended from a leg 30 of the composite structure 10 through the joint 32 the composite part. Such use of unidirectional fibers causes input loads at leg 30 to be effectively transferred, or dispersed through joint 32 and into the center section 28 of composite structure 10. A welded steel structure does not provide the same efficient continuity to transfer loads to the more rigid center section of the structure. With a steel subframe, if the joints of the steel subframe are not stiff enough or strong enough to handle the input loads, the solution is to increase the gauge of the steel parts or add other reinforcements, both of which increase the cost, weight, and manufacturing complexity of the part. Another alternative is to reduced the allowable service loads the structure may be subjected to which degrades the functionality of the steel subframe structure. With the composite structure 10, further unidirectional fibers can be added or higher strength or stiffness fibers such as carbon graphite fibers can be selectively used to increase the strength or stiffness of the structure without adding significantly to the weight of the part, or to the manufacturing complexity.

Wrapping foam core 12 and sandwiching it between fiber preforms 14 and 16 further enhances the structural sections within the composite structure 10. As can be seen in Fig. 5, the foam core 12, fiber preforms 14 and 16, and wrapping 24 and 26 define a completed closed "box" section. It is well known that such closed "box" sections provide enhanced structural capabilities. The "box" section illustrated in Fig. 5 is typical of the sections in each of the legs 30, joints 32 and center section 28 of the composite structure 10.

Once the composite subframe 10 is fully wrapped with the steel inserts 18 generally located, core insert 15 is inserted into the center section of the composite chassis structure 10. Core insert 15 provides added structure and further stiffens the center section 28. The wrapped composite chassis structure 10, is then sandwiched between preforms 14 and 16, and is placed into a mold 50 as illustrated in Fig. 4. A plurality of apertures 17 and cutouts 19 are provided in preforms 14 and 16 to allow clearance for inserts 18.

The present invention requires only a single molding tool although, if it is necessary to produce the composite chassis structure in large quantities, several molds may be required. Mold 50 has a top half 52 and bottom half 54, and is capable of acting as a self contained tool by providing the necessary clamping force to hold the top 54 tightly against bottom 52 during the molding cycle through the action of cylinders 56 and 58. Once the composite chassis structure 10 is placed in the mold, and as described above, tooling pins 23 precision locate the inserts 18 with respect to each other and the composite subframe structure 10. The mold is then closed, and resin is injected and allowed to impregnate the reinforcing fibers. After the resin is cured, a completed composite subframe structure 10 is removed from the mold generally requiring no other post processing.

It is important that the steel inserts 18 be securely retained to the composite structure 10 when it is placed into service. Therefore, unidirectional reinforcing fiber cloth may be selectively used to wrap the inserts 18 to the composite structure 10. In addition, illustrated in Figs. 6 and 7 are further embodiments of the steel inserts 18 which provide for a way of positively tying the steel inserts 18 to the composite structure 10. Primed reference numerals are used to distinguish the various embodiments of the steel inserts 18 in these embodiments. As can be seen in Fig. 6, flange 36, of steel insert 18' is formed with a slot 38 as opposed to the flanges 20 of insert 18 illustrated in Figs. 1. Slot 38 allows strips of reinforcing fiber cloth 40 to be wrapped through slot 38 around flange 36 and then further around the composite structure 10 thereby positively tying the steel insert 18' to the composite structure 10. By using unidirectional reinforcing fiber cloth, very high retaining forces can be created. When the magnitudes and directions of the loads the steel inserts 18'' are to be subjected to are known, slots 42 and 44 can be orientated as shown in Fig. 7. Orienting slots 42 and 44 along the direction of the anticipated loads allows for the wrapping with unidirectional reinforcing fiber cloth 46 and 48 substantially aligned with the anticipated loads. Using unidirectional reinforcing fiber cloth 46 and 48 along these same directions greatly enhances the retaining force exerted on the steel inserts 18'' ensuring that they will be retained under all loading conditions.

The present invention provides a composite chassis subframe 10 suitable for use in automobile applications and superior in cost, weight and performance characteristics as compared to traditional steel chassis subframes.

## Claims

1. A composite chassis structure comprising:
a) a core (12) generally defining the shape of the chassis structure;
b) a plurality of metal inserts (18, 18', 18'') positioned about the core (12) for attaching chassis components thereto;
c) retaining means (20) for retaining said metal inserts (18) to said core (12); and
d) fiber reinforced material (14, 16; 24, 26) surrounding the core (12) and rigidly securing the steel inserts (18) to the core (12), said fiber reinforced material being impregnated with resin.

2. The composite chassis structure of claim 1 wherein the fiber reinforced material comprises a first and a second fiber reinforced preform (14, 16) surrounding the core (12).

3. The composite chassis structure of claim 1 wherein the fiber reinforced material comprises reinforcing fiber cloth (24, 26) wrapped aroung the core (12).

4. The composite chassis structure of claim 1 wherein said reinforcing fibers comprise reinforcing fiber cloth (24, 26) wrapped around the core (12), and first and second fiber reinforced preforms (14, 16) surrounding the wrapped core (12).

5. The composite chassis structure of claim 1 wherein the fiber reinforced material (24, 26) further comprises oriented reinforcing fibers.

6. The composite chassis structure of claim 5 wherein the reinforcing fibers are oriented substantially unidirectionally.

7. The composite chassis structure of claim 5 wherein the reinforcing fibers are oriented substantially at plus/minus 45 degree angles to each other.

8. The composite chassis structure of claim 1 wherein the core (12) comprises a foam core structure.

9. The composite chassis structure of claim 1 wherein said retaining means comprises a plurality of mounting tabs (20) formed on said steel inserts (18, 18', 18'') which nest against the wrapped core (12) of the composite chassis structure (10), and reinforcing fiber cloth (24, 26) wrapped around said mounting tabs (20) and core (12) thereby retaining the steel inserts (18, 18', 18'') to the composite chassis structure (10).

10. The composite chassis structure of claim 9 further comprising a slot (38, 42, 44) formed in said mounting tabs (20), and said reinforcing fiber material comprises reinforcing fiber cloth (40, 46, 48) inserted through said slot (38) and wrapped aroung said core (12).

11. The composite chassis structure of claim 10 wherein said slot (38, 42, 44) is oriented such that said reinforcing fibers (40, 46, 48) passing through said slot (38, 42, 44) are substantially aligned to optimumly react loads, and said reinforcing fiber cloth (40, 46, 48) comprises reinforcing fibers oriented unidirectionally.

12. A composite chassis structure comprising:
a) a core (12) generally defining the shape or the composite chassis structure (10);
b) a plurality of steel inserts (18, 18', 18'') selectively positioned about the core (12), said inserts (18, 18', 18'') having tabs (20) which nest against the core (12);
c) reinforcing fibers (14, 16; 24, 26; 40, 46, 48) wrapped around the tabs (20) and the core (12) thereby retaining the inserts (18, 18', 18'') to the core (12);
d) oriented reinforcing fibers selectively positioned about the core (12) for locally strengthening and stiffening the composite chassis structure (10); and
e) resin impregnating the reinforcing fibers.

13. The composite chassis structure of claim 12 wherein said oriented reinforcing fibers are oriented substantially unidirectionally.

14. The composite chassis structure of claim 12 wherein said oriented reinforcing fibers are oriented substantially at plus/minus 45 degree angles to each other.

15. A method of making a composite chassis structure comprises:
a) providing a core (12) having generally the shape of the desired chassis structure;
b) surrounding the core (12) with reinforcing fibers (24, 26);
c) attaching metal inserts (18, 18', 18'') to the core (12);
d) wrapping the metal inserts (18, 18', 18'') and the core (12) with additional reinforcing fibers (40, 46, 48) to retain the steel inserts (18, 18', 18'') to the core (12);
e) placing the wrapped core (12) and steel inserts (18, 18', 18'') in a mold (50); and
f) injecting resin material into reinforcing fibers in the mold (50).

16. The method of claim 15 further comprising the step of precision locating the metal inserts (18, 18', 18'') inside the mold (50).

17. The method of claim 15 wherein said step of surrounding further comprises forming a first and second fiber reinforced preform (14, 16) and placing the core (12) between the first and second fiber reinforced preforms (14, 16).

18. The method of claim 15 wherein said metal inserts (18, 18', 18'') further comprise mounting tabs (20) having a slot (38, 42, 44) formed therein, and said step of wrapping further comprises passing reinforcing fibers (40, 46, 48) through said slot (38, 42, 44) and then wrapping them around the core (12).

19. The method of claim 18 further comprising the step of aligning the slot formed in the mounting tabs to optimumly react loads imparted on said metal inserts.

20. The method of claim 15 further comprising the step of aligning substantially unidirectionally oriented reinforcing fibers to locally maximize structural strength of the composite structure.
